# FASCICULE DE BREVET EUROPEEN

(11) **EP 3 716 523 B1**
(45) Date de publication et mention de la délivrance du brevet: **05.06.2024**
(21) Numéro de dépôt: 20165991.9
(22) Date de dépôt: 26.03.2020
(51) Int. Cl.: H04L 7/033

(54) **PROCÉDÉ DE SYNCHRONISATION DE DONNÉES NUMÉRIQUES ENVOYÉES EN SÉRIE**
SYNCHRONISIERUNGSVERFAHREN VON IN SERIE GESENDETEN DIGITALEN DATEN
METHOD FOR SYNCHRONISING DIGITAL DATA SENT IN SERIES

(30) Priorité: 29.03.2019 FR 1903376
(43) Date de publication de la demande: 30.09.2020
(73) Titulaire: Teledyne E2V Semiconductors SAS, 38120 Saint-Egrève (FR)
(72) Inventeur: BERAUD-SUDREAU, Quentin, 38140 Rives (FR); LIGOZAT, Jérôme, 38000 Grenoble (FR)
(74) Mandataire: Atout PI Laplace

(56) Documents cités:
- US-A- 5 341 404
- US-A1- 2011 170 644
- US-A1- 2015 280 898

## Description

La présente invention concerne un procédé de synchronisation de données numériques envoyées en série par un transmetteur sur un récepteur, et un dispositif permettant de mettre en oeuvre un tel procédé.

Les données numériques sont généralement émises par un émetteur ayant un signal d'horloge différent de celui du récepteur. Afin de s'assurer que ces données, envoyées en série, sont bien reçues par le récepteur, il faut qu'elles soient synchronisées sur le signal d'horloge du récepteur.

Il existe différentes solutions pour synchroniser des données envoyées par le transmetteur avec l'horloge du récepteur, illustrées par les documents US 5 341 404 A, US 2015/0280898 et US 2011/0170644, par exemple l'utilisation d'une boucle à verrouillage de phase ou le sur-échantillonnage des données.

L'utilisation de boucle à verrouillage de phase est une solution analogique qui peut être délicate à mettre en oeuvre notamment à cause de l'étude de stabilité de la boucle nécessaire pour sa mise en oeuvre, de sa conception longue et de sa non-réutilisabilité en cas de changement de spécifications.

La méthode de sur-échantillonnage des données s'appuie sur une génération de nombreuses horloges déphasées grâce à l'horloge du récepteur et un système de vote qui permet de choisir l'horloge, dite horloge élue, la plus au centre de l'œil du diagramme de l'œil (représentation du flux de données reçu à l'oscilloscope qui est synchronisé sur le signal d'horloge du récepteur) des données entrantes. De plus, il faut également synchroniser l'horloge élue avec l'horloge du récepteur pour toutes les données entrantes dans le récepteur, car l'horloge élue peut seulement être en métastabilité avec l'horloge du récepteur. Cela nécessite un bloc de génération de phases d'horloge, un système de vote et un système de ré-échantillonnage des données entrantes. Le bloc de génération de phases d'horloge est souvent une mémoire FIFO (First In First Out) qui est une mémoire fonctionnant sur deux horloges. La mémoire FIFO ne génère aucune horloge déphasée, elle permet juste d'écrire des données avec une première horloge et de lire ces données avec une seconde horloge. Cela permet de faire l'interface entre l'horloge du récepteur et l'horloge élue. Cette mémoire a pour inconvénient d'être volumineuse, énergivore et encombrante, car elle doit être présente pour chaque voie d'entrée du récepteur.

L'invention vise à remédier aux inconvénients précités de l'art antérieur, plus particulièrement elle vise à proposer un procédé de synchronisation de données numériques en série sans utiliser de mémoire FIFO, le procédé s'appuyant sur l'utilisation d'une seule horloge, en particulier celle du récepteur.

Un objet de l'invention est donc un procédé de de synchronisation de données numériques envoyées en série par un transmetteur ayant un signal d'horloge de fréquence freq1 à un récepteur ayant un signal d'horloge de fréquence freq2, caractérisé en ce qu'il comprend les étapes a) à d) itérées jusqu'à ce qu'une condition d'arrêt soit satisfaite et une étape e) réalisée à la suite de la dernière itération de l'étape d), les étapes a) à e) étant les suivantes :
a) envoi d'une donnée numérique par le transmetteur vers le récepteur ;
b) génération de N voies, chacune des voies comprenant la donnée reçue par le récepteur, et chaque i-ème voie étant décalée temporellement par rapport à la (i-1)-ème voie, N étant un entier supérieur à 3 et i étant compris entre 2 et N ;
c) échantillonnage des N voies à la fréquence freq2 de l'horloge h2 du récepteur afin de générer des données numériques alignées temporellement sur l'horloge h2 ;
d) comparaison des données des N voies par groupe de (2m+1) voies successives, m étant supérieur ou égal à 1 et tel que (2m+1) est inférieur ou égal à N, et sélection de groupes de (2m+1) voies pour lesquels les (2m+1) voies successives ont des données identiques à chaque itération ;
e) sélection d'une des voies appartenant aux groupes sélectionnés à l'étape précédente, les données comprises dans cette voie étant considérées comme synchronisées et en phase avec l'horloge h2 du récepteur et définition d'une variable P égale à la valeur i de la voie sélectionnée.

Selon plusieurs modes de réalisation de l'invention :
- Durant la première itération de l'étape d), la comparaison des valeurs par groupe de (2m+1) voies successives est réalisée sur les N voies et durant les itérations suivantes, elle est réalisée sur toutes les (2m+1) voies successives comprises dans les groupes sélectionnés à l'itération précédente de l'étape d) ;
- Le procédé comprend une étape d') réalisée entre la dernière itération de l'étape d) et l'étape e) dans lequel un groupe de (2m+1) voies successives est choisi parmi les groupes sélectionnés à la dernière itération de l'étape d), ce groupe choisi pouvant être le seul groupe sélectionné à la dernière itération de l'étape d), ou parmi les groupes sélectionnés à la dernière itération de l'étape d), ce groupe choisi pouvant être celui présentant une valeur de m la plus élevée, ou parmi les groupes sélectionnés à la dernière itération de l'étape d), ce groupe choisi pouvant être celui dont les voies successives sont les plus proches de la voie N/2, si N est pair ou de la voie (N+1)/2 si N est impair;
- La voie sélectionnée à l'étape e) est la voie m+1 d'un groupe de (2m+1) voies successives sélectionné à l'étape précédente ;
- La condition d'arrêt est choisie parmi un nombre d'itérations défini par un utilisateur ou dès qu'il ne reste plus qu'un seul groupe de (2m+1) voies successives ayant des données identiques à l'étape d) ;
- L'étape b) comprend également une interpolation des données des N voies ;
- m est compris entre 1 et 4 ;
- L'étape c) comprend plusieurs sous-étapes d'échantillonnage des N voies à des fréquences strictement inférieures à la fréquence freq2, de manière à ce qu'à la suite de toutes les sous-étapes d'échantillonnage, les N voies soient échantillonnées à la fréquence freq2 ;
- Le procédé comprend les étapes supplémentaires suivantes réalisées à la suite de l'étape e) :
   f) envoi d'une donnée numérique par le transmetteur vers le récepteur, génération de N voies, chacune des voies comprenant la donnée reçue par le récepteur, et chaque i-ème voie étant décalée temporellement par rapport à la (i-1)-ème voie, N étant un entier supérieur ou égal à 3 et i étant compris entre 2 et N, et échantillonnage des N voies à la fréquence freq2 afin de générer des données numériques alignées temporellement sur l'horloge h2 ;
   g) comparaison des données numériques des (2m+1) voies successives du groupe sélectionné à l'étape d) et comprenant la P-ème voie, P étant défini à l'étape e) ;
   h) modification de la valeur de P si les valeurs des données des (2m+1) voies comparées à l'étape g) sont différentes, telle que si la donnée de la voie m du groupe de (2m+1) voies est différente de la voie (m+1), alors la valeur de P devient égale à (P - 1), ou telle que si la donnée de la voie m+2 du groupe de (2m+1) voies est différente de la voie (m+1), alors la valeur de P devient égale à (P + 1).

Un autre objet de l'invention est un dispositif de synchronisation de données numériques pour la mise en oeuvre d'un procédé de synchronisation selon la revendication indépendante 10.

D'autres caractéristiques, détails et avantages de l'invention ressortiront à la lecture de la description faite en référence aux figures annexées données à titre d'exemple et qui représentent, respectivement :
[Fig.1], un schéma des étapes du procédé selon un premier mode de réalisation de l'invention ;
[Fig. 2], un chronogramme des étapes a), b) et c) du procédé selon l'invention ;
[Fig.3], un schéma des étapes du procédé selon un second mode de réalisation de l'invention ;
[Fig. 4], un dispositif selon l'invention permettant de mettre en oeuvre le procédé selon l'invention ; et
[Fig. 5], un dispositif selon un autre mode de réalisation de l'invention permettant de mettre en oeuvre le procédé.

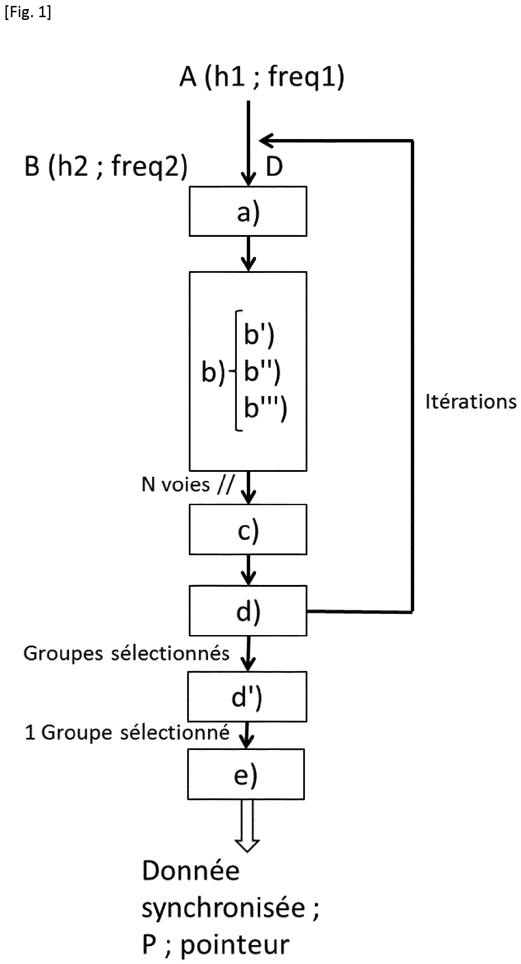

[Fig. 1] représente un schéma des étapes d'un procédé de synchronisation de données numériques, envoyées en série, sur un signal d'horloge d'un récepteur B selon un premier mode de réalisation de l'invention. Le procédé comprend quatre étapes a) à d) itérées jusqu'à ce qu'une condition d'arrêt soit satisfaite et une étape e) réalisée après la dernière itération de l'étape d). Le procédé peut également comprendre une étape d') réalisée entre la dernière itération de l'étape d) et l'étape e).

La première étape (étape a)) consiste à envoyer des données numériques D, comprenant un ensemble de bits, à un récepteur B par un transmetteur A. Le transmetteur A est synchronisé sur une horloge h1 de fréquence freq1, tandis que le récepteur B est synchronisé sur une horloge h2 de fréquence freq2. A chaque itération de l'étape a), de nouvelles données D sont envoyées par le transmetteur A vers le récepteur B, ces données peuvent être identiques ou différentes des données D envoyées à l'itération précédente. La fréquence freq1 peut être égale à la fréquence freq2.

Lors de l'étape b), on génère N voies comprenant, chacune, la donnée D envoyée à l'étape a), N étant un entier supérieur ou égal à 3. Chaque voie est décalée temporellement par rapport à la précédente. Ainsi entre la i-ème voie et la (i-1)-ème voie, i étant un entier compris entre 2 et N, il y a un décalage temporel. Cette étape b) permet de générer plusieurs voies comprenant chacune la donnée D envoyée par le transmetteur A et présentant chacune un déphasage par rapport à l'horloge h2, le nombre de voies générées étant suffisant pour couvrir toute une période du signal d'horloge h2, ce nombre de voies étant au minimum 3.

Puis dans l'étape c), les N voies sont échantillonnées, en même temps, à la fréquence freq2 du signal d'horloge h2 du récepteur B. Cela permet de d'obtenir pour chacune des voies, la valeur de bit représentant « l'état de la donnée » contenue dans la voie au moment de l'échantillonnage pour chaque itération du procédé.

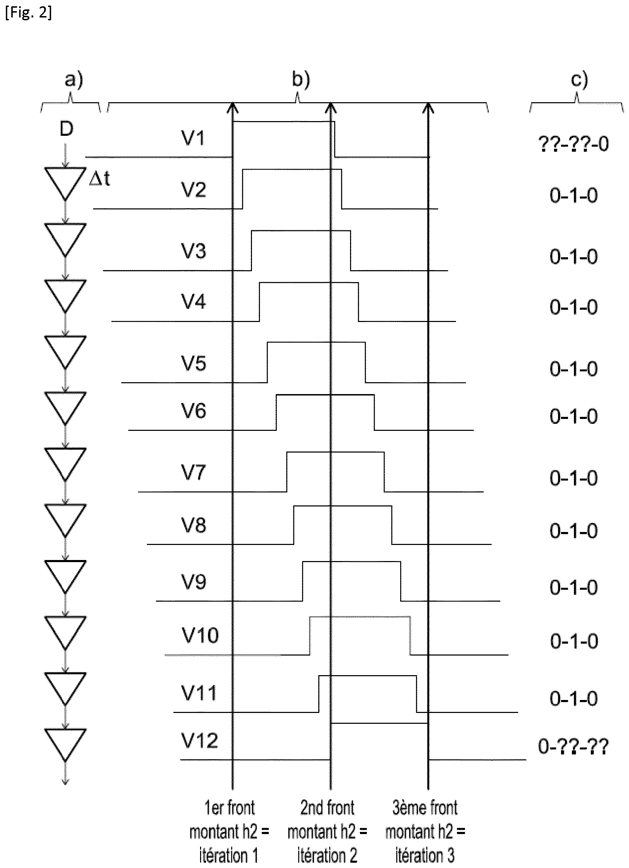

[Fig. 2] présente un exemple de chronogramme des étapes a), b) et c) du procédé, dans lequel 12 voies sont générées, et pour lequel une itération correspond à un coup d'horloge de h2. Lors de l'étape a), une donnée numérique D est envoyée par un transmetteur A vers un récepteur B. Lors de l'étape b), 12 voies sont générées (V1 à V12) et un décalage temporel Δt est présent entre deux voies successives. Les données représentées sur la figure 2 pour l'étape b) sont les données reçues à l'issue de trois itérations. Puis, à l'étape c), on échantillonne les 12 voies générées, ce qui permet d'obtenir « l'état de la donnée » contenue dans chaque voie à chaque coup d'horloge de h2, car dans cet exemple une itération a lieu à chaque coup d'horloge de h2. Ainsi, sur la première voie (V1), le coup d'horloge a lieu pendant le changement d'état de la donnée (c'est-à-dire où le moment où la valeur de bit passe de 0 à 1), donc à la 1^{ère} itération pour la voie 1 (V1), la valeur renvoyée sera comprise strictement entre 0 et 1, tandis que pour la voie 2 (V2), elle sera également à 0. Ainsi pour les trois itérations représentées sur la figure 2, on constate que sur la voie 1 (V1), on obtiendra une suite de bits XX - XX - 0, où XX représente un nombre compris strictement entre 0 et 1, tandis que pour les voies 2 à 11 (V2 à V11), on obtiendra la suite 0 - 1 - 0 et pour la voie 12 (V12), on obtiendra 0 - XX - XX.

Cette étape d'échantillonnage peut être une seule étape d'échantillonnage à la fréquence freq2, ou elle peut être une succession de sous-étapes c'), c"), c‴) d'échantillonnage à une fréquence strictement inférieure à freq2, de manière à ce que l'échantillonnage total (c'est-à-dire après toutes les sous-étapes c'), c") et c‴)) résulte en N voies échantillonnées à la fréquence freq2. Une sous-étape d'échantillonnage est décalée temporellement d'une demi-période du signal d'horloge h2 du récepteur B par rapport à la sous-étape d'échantillonnage précédente (par exemple entre la sous-étape c') et c") ou entre c") et c‴)), car il n'est pas possible de réaliser les sous-étapes d'échantillonnage, pour une voie, en même temps. Ces sous-étapes d'échantillonnage permettent de travailler avec des signaux d'horloge à haute fréquence. Par exemple pour des données devant être échantillonnées à 12 GHz, on pourra réaliser quatre sous-étapes d'échantillonnage à 3 GHz. Les données présentes sur les N voies échantillonnées sont donc synchronisées et en phase avec l'horloge h2 à l'issue de cette étape. Les étapes suivantes du procédé vont permettre de déterminer quelles sont les données des voies qui sont utilisables par le récepteur B, c'est-à-dire quelles sont les données qui sont considérées être au centre de l'œil du diagramme de l'œil.

Puis dans l'étape d), on compare les données numériques, c'est-à-dire les valeurs des bits, des N voies par groupes de (2m+1) voies successives, m étant un entier supérieur ou égal à 1 et tel que (2m+1) est inférieur ou égal à N. On sélectionne ensuite les groupes de (2m+1) voies successives dans lesquels les (2m+1) voies présentent des données identiques à chaque itération des étapes a) à d). En prenant l'exemple de la figure 2, on compare donc pour la première itération les valeurs de bits des 12 voies et on peut voir que les voies 2 à 12 ont des valeurs identiques, on peut donc sélectionner le groupe V2 à V12 comprenant 11 voies successives à données identiques, les groupes V2 à V10, V3 à V11 et V4 à V12 comprenant 9 voies successives à données identiques, etc .... Pour la seconde itération, les voies 2 à 11 ont des valeurs identiques, on peut donc sélectionner le groupe V2 à V10 comprenant 9 voies successives et le groupe V3 à V11 comprenant également 9 voies successives, etc ...

Enfin, dans l'étape e), on sélectionne une des voies appartenant aux groupes sélectionnés à l'étape précédente. Les données comprises dans cette voie seront statistiquement celles présentes au milieu de l'œil, si on regardait le diagramme de l'œil, elles sont donc considérées comme synchronisées et en phase avec l'horloge h2 du récepteur B. On définit également dans cette étape, une variable notée P égale au numéro de la voie sélectionnée, c'est-à-dire égale à la valeur i de la voie sélectionnée. Ce sont les données de cette P-ème voie qui sont utilisées par le récepteur B.

Le procédé peut également comprendre une étape d') réalisée juste avant l'étape e) consistant à choisir un groupe parmi les groupes sélectionnés lors de la dernière itération de l'étape d). En effet, il est possible qu'à la dernière itération de l'étape d), plusieurs groupes aient été sélectionnés, or seule une voie est réellement synchronisée et en phase avec l'horloge h2 du récepteur B et au milieu de l'œil du diagramme de l'œil, donc il faut pouvoir choisir le « bon groupe » comprenant la voie au milieu de l'œil.

Si seul un groupe a été sélectionné à l'issue des itérations de l'étape d), alors le groupe choisi est cet unique groupe sélectionné.

S'il y a plusieurs groupes sélectionnés à l'issue des itérations de l'étape d), il y a différentes façons de choisir ce groupe : on peut choisir le groupe ayant la plus grande valeur de m, c'est-à-dire choisir un groupe présentant 9 voies successives de données identiques plutôt qu'un groupe présentant 7 voies successives de données identiques ; ou choisir le groupe qui comprend les voies successives les plus proches de la voie N/2, si N est pair, ou les plus proches de la voie (N+1)/2 si N est impair.

Il est également possible de choisir un des groupes sélectionnés en appliquant ces deux critères de choix. En effet, il est possible d'avoir plusieurs groupes ayant le même plus grand nombre de voies identiques et donc de devoir choisir l'un de ces groupes en regardant lequel comprend les voies les plus proches de la voie N/2 ou de la voie (N+1)/2, selon la parité de N.

Cela permet ainsi de n'avoir plus qu'un seul groupe sélectionné pour la sélection de la voie à l'étape e).

Par ailleurs, de manière préférentielle, la voie sélectionnée à l'étape e) est la « voie du milieu » d'un groupe sélectionné, c'est-à-dire que c'est la voie m+1 du groupe de (2m+1) voies successives. Ainsi pour un groupe de 3 voies, la voie sélectionnée sera la seconde voie du groupe, ou pour un groupe de 5 voies, ce sera la troisième voie du groupe.

Dans l'étape d), il est également possible de ne faire la comparaison des données que pour les voies appartenant à un groupe sélectionné à l'itération précédente. Ainsi, à la première itération de l'étape d), la comparaison des données se fait pour les N voies, tandis que pour les itérations suivantes, la comparaison des données ne se fait que sur les voies comprises dans les groupes sélectionnés à l'itération précédente. Cela permet d'accélérer la comparaison et la sélection des groupes au cours des itérations.

Dans l'étape d), de manière préférentielle, on cherche d'abord à sélectionner des groupes comprenant le plus de voies successives à données identiques. Ainsi, on sélectionne, par exemple, plutôt des groupes comprenant 9 voies plutôt que 7 voies. Donc à l'issue d'une itération, si deux groupes de 9 voies sont sélectionnés ainsi que 3 groupes de 7 voies, on n'effectuera la recherche des groupes de voies à données identiques que pour les voies comprises dans les deux groupes de 9 voies.

Préférentiellement, durant l'étape d), la recherche des groupes de (2m+1) voies successives à données identiques se fait en parallèle pour chaque valeur de m possible. Ainsi, on recherche en parallèle des groupes de 3 voies, des groupes de 5 voies, des groupes de 7 voies, etc...

Selon un mode de réalisation, l'étape e) peut également comprendre la définition d'un pointeur contenant l'adresse de la ligne sélectionnée dans cette étape, c'est-à-dire l'adresse de la P-ème voie, et son stockage dans une mémoire.

Selon un mode de réalisation, la condition d'arrêt aux itérations des étapes a) à d) peut être un nombre défini d'itérations, choisi par exemple par un utilisateur. Un nombre typique d'itérations est 1000.

Selon un autre mode de réalisation, la condition d'arrêt est satisfaite dès qu'il ne reste plus qu'un seul groupe sélectionné à l'étape d), c'est-à-dire dès qu'il ne reste plus qu'un seul groupe de (2m+1) voies successives présentant des données identiques pour chaque itération de l'étape d).

Selon un mode de réalisation de l'invention, la valeur de m est choisie parmi {1 ; 2 ; 3 ; 4}, ce qui permet de comparer les valeurs des N voies par groupe de 3 voies successives, par groupe de 5 voies successives, par groupe de 7 voies successives et par groupe de 9 voies successives.

Selon un mode de réalisation, le décalage temporel entre chaque voie est le même pour toutes les voies, ainsi les voies sont décalées temporellement de manière régulière.

Selon un mode de réalisation, l'étape b) comprend également une interpolation des données des N voies, ce qui permet de générer des retards temporels plus courts que ceux fournis par des circuits de retard usuels (par exemple, ceux fournis par des inverseurs ou des tampons (« buffers » en anglais)). Ainsi le retard entre deux voies successives est plus court. Grâce à cette interpolation, on peut avoir une granularité plus fine et donc avoir plus de voies à comparer dans une période d'horloge h2.

Selon un mode de réalisation, les itérations des étapes a) à d) sont synchronisées avec chaque coup d'horloge h1 du transmetteur A. La première itération correspond donc au premier front montant de l'horloge h1, la seconde itération correspond au second front montant de l'horloge h1 et la I-ème itération correspond au I-ème front montant de l'horloge h1, l étant un entier supérieur ou égal à 1.

Selon un autre mode de réalisation, les itérations des étapes a) à d) ont une fréquence égale à M x freq1 avec M un entier supérieur à 2. Ainsi la première itération aura par exemple lieu au premier front montant de l'horloge h1 et la I-ème itération aura lieu au (I x M)-ème front montant de l'horloge h1.

Selon un autre mode de réalisation, les itérations des étapes a) et d) ne sont pas synchronisées avec l'horloge h1 du transmetteur A. L'envoi des données D a lieu de façon régulière avec une fréquence inférieure à la fréquence freq1 de l'horloge h1.

Des fluctuations en température ou des différentes alimentations possibles pour l'émetteur et le récepteur peuvent créer des petits retards temporels variables lors de l'envoi des données vers le récepteur. Cela a pour effet de décaler temporellement, au cours du temps, la voie sélectionnée et considérée comme synchronisée avec le récepteur. Ainsi, la voie sélectionnée va se désynchroniser légèrement avec l'horloge h2, et la voie réellement synchronisée avec h2 sera l'une des voies voisines. Il est donc important de toujours vérifier si la voie sélectionnée est toujours synchronisée avec l'horloge h2 et donc s'il ne faut pas modifier la valeur de P.

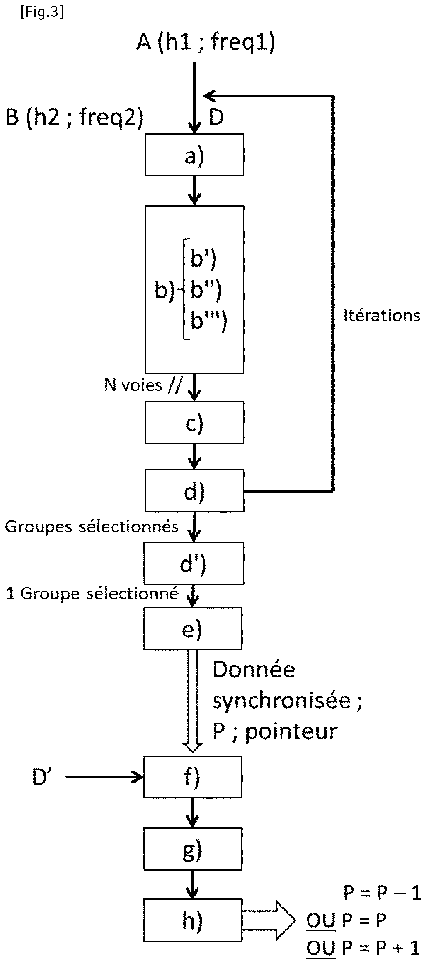

[Fig. 3] représente un schéma des étapes d'un procédé de synchronisation, selon un mode de réalisation de l'invention, comprenant des étapes supplémentaires permettant de prendre en compte les éventuels retards temporels crées par des fluctuation des alimentations et/ou par des fluctuations en température et ainsi d'adapter la valeur de P. Après avoir défini la valeur de P dans l'étape e), l'étape f) consiste à envoyer une donnée numérique D' du transmetteur A vers le récepteur B et à générer N voies comprenant chacune la donnée numérique D' avec N un entier supérieur ou égal à 3, chaque i-ème voie étant décalée temporellement par rapport à la (i-1)ème voie, et i étant un entier compris entre 2 et N. Après la génération des N voies, on échantillonne les N voies à la fréquence freq2 de l'horloge h2 du récepteur. Comme indiqué dans la description de la figure 1, l'échantillonnage des N voies peut se faire en une seule fois ou en plusieurs sous-étapes d'échantillonnage (étapes c'), c") et c‴)) de manière à ce que l'échantillonnage total corresponde à un échantillonnage à la fréquence freq2.

Dans l'étape g), on compare les données numériques (générées à partir de la donnée D') des (2m+1) voies successives du groupe sélectionné à l'étape d) et comprenant la P-ème voie, P étant défini à l'étape e) du procédé.

Dans l'étape h), on modifie la valeur de P si les valeurs des données numériques comparées à l'étape g) sont différentes. Ainsi, si la donnée de la voie m du groupe de (2m+1) voies est différente de la donnée de la voie (m+1), alors la valeur de P devient (P-1), tandis que si la donnée de la voie (m+2) du groupe de (2m+1) voies est différente de la donnée de la voie (m+1), alors la valeur de P devient (P+1). Si les données sont identiques, la valeur de P n'est pas modifiée.

La valeur de P, modifiée ou non à l'étape h), permet alors de définir quelle est la voie synchronisée avec le signal d'horloge h2 du récepteur et donc quelle est la voie à fournir au récepteur.

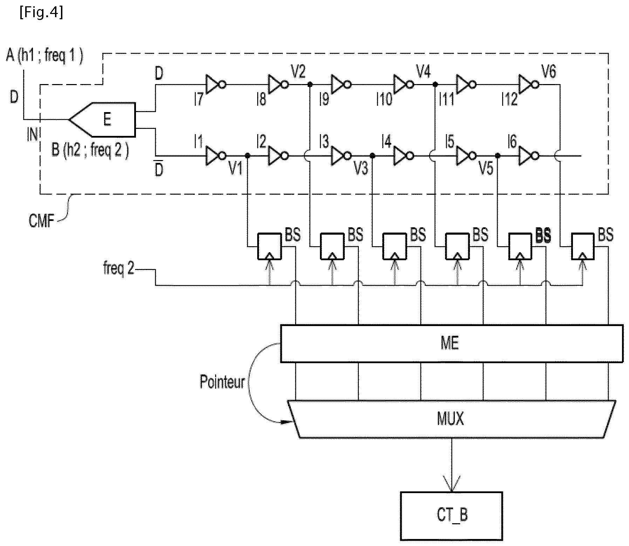

[Fig. 4] représente un dispositif de synchronisation de données numériques selon l'invention permettant de mettre en oeuvre le procédé décrit précédemment. Le dispositif comprend un circuit de remise en forme CMF de la donnée numérique D envoyée par un émetteur A ayant un signal d'horloge h1 de fréquence freq1. Le circuit de remise en forme CMF est relié à une entrée IN du dispositif et est configuré de manière à recevoir une donnée numérique D de l'émetteur A et à générer N voies décalées temporellement les unes par rapport aux autres, N étant un entier supérieur ou égal à 3. Dans le dispositif présenté en figure 4, le circuit de remise en forme CMF comprend un égaliseur E qui reçoit la donnée D et ressort la donnée D et son complément D̅ sur sa sortie différentielle (il y a donc deux voies différentes en sortie de l'égaliseur E). Plusieurs inverseurs (I1 à I6 et I7 à I12) en série sont reliés aux deux sorties de l'égaliseur E. Ce sont les inverseurs (I1 à I12) qui permettent de générer le décalage temporel entre les N voies (ici N = 6) qui comprennent chacune la donnée numérique D reçue sur l'entrée IN du dispositif. Ainsi la première voie V1 est générée à la sortie du premier inverseur I1 de la sortie de l'égaliseur E comprenant la donnée complémentée D, la seconde voie V2 est générée à la sortie du second inverseur I8 de la sortie de l'égaliser E comprenant la donnée D.

Le dispositif comprend également des bascules BS, en particulier des bascules de type D, dite « bascule data », qui permettent d'échantillonner les N voies à la fréquence freq2 du récepteur B. Chaque voie comprend au moins une bascule BS.

La sortie de chaque bascule BS des N voies est appliquée à un circuit numérique séquentiel, dit machine d'état ME, qui reçoit donc en entrée les N voies échantillonnées à la fréquence freq2. La machine d'état ME est configurée de manière à recevoir les N voies échantillonnées, à comparer les données numériques des N voies par groupe de (2m+1) voies successives, à sélectionner au moins un groupe de (2m+1) voies successives ayant des données identiques, à sélectionner une des voies des groupes sélectionnées et à définir la valeur de P. La réalisation de ce circuit numérique séquentiel est connue de l'homme du métier et ne lui pose aucune difficulté particulière.

La machine d'état ME peut également être configurée pour pouvoir choisir un groupe parmi les groupes sélectionnés. Elle peut également comprendre une mémoire et être configurée pour définir un pointeur comprenant l'adresse de la voie sélectionnée qui sera stocké dans la mémoire.

Un multiplexeur MUX peut également être présent à la sortie de la machine d'état ME afin de recevoir les N voies reçues en entrée de la machine d'état ME après que la machine ME les ait comparées. Dans ce cas, la machine d'état ME est également configurée pour fournir l'adresse de la voie sélectionnée (par exemple grâce au pointeur) en entrée du multiplexeur MUX afin que la donnée numérique de la voie sélectionnée puisse être récupérée en sortie du multiplexeur MUX.

Un circuit de traitement CT_B compris dans le récepteur B peut être relié à la sortie du multiplexeur MUX afin de traiter les données de la voie reçue.

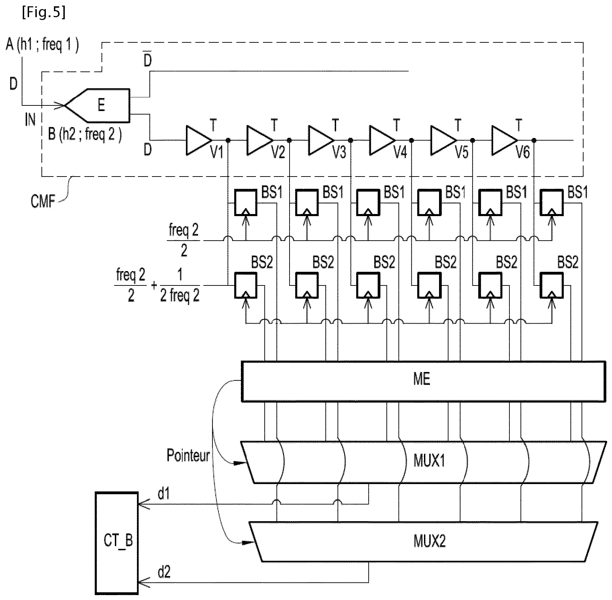

[Fig. 5] présente un autre dispositif de synchronisation permettant de mettre en oeuvre le procédé selon l'invention. Ce dispositif comprend toujours un circuit de remise en forme CMF qui permet de générer les N voies décalées temporellement les unes par rapport aux autres. Dans cet autre dispositif, la sortie complémentée D̅ de l'égaliseur E n'est pas utilisée. La sortie non complémentée de l'égaliseur E comprend plusieurs tampons (ou « buffers » en anglais) en série qui permettent de générer les N voies et leur retard. Sur cet exemple, 6 buffers T et 6 voies (V1 à V6) sont représentés. Ainsi la première voie V1 est récupérée en sortie du premier buffer T, la seconde voie V2 est récupérée à la sortie du second buffer, etc ...

Puis, les 6 voies, et plus généralement, les N voies sont échantillonnées à la freq2 en passant dans des bascules (BS1 et BS2). Sur cette figure, deux étages de bascules BS1 et BS2 en parallèle sont représentés, donc chaque voie comprend ici deux bascules. Le premier étage échantillonne les N voies à la fréquence freq2/2 et le second étage à la fréquence freq2/2 + 1/(2 x freq2).

Néanmoins, ce dispositif pourrait comprendre un seul étage de bascules BS, comme présenté en figure 4, qui échantillonnent, chacune, une des N voies à la fréquence freq2, ou il pourrait comprendre plus de deux étages de bascules BS en parallèle, chaque étage de bascules B échantillonnant les N voies à une fréquence strictement inférieure à freq2 et l'ensemble des étages des bascules BS permettant d'obtenir N voies échantillonnées à la fréquence freq2 et les deux horloges de deux bascules de deux voies successives étant décalées d'une demi-période du signal d'horloge h2, c'est-à-dire décalées de 1/(2 x freq2).

Plus généralement, le dispositif comprendra autant d'étages de bascules BS en parallèle qu'il y a de sous-étapes d'échantillonnage dans le procédé. Donc pour un procédé comprenant 3 sous-étapes d'échantillonnage (étapes c'), c") et c‴)), il y aura 3 étages de bascules BS en parallèle dans le dispositif. De manière préférentielle, le dispositif comprend un nombre pair d'étages de bascules BS en parallèle par voie.

Si on travaille avec plusieurs étages de bascules BS, chaque étage de bascules est décalé temporellement d'une demi-période du signal d'horloge h2 du récepteur B par rapport à l'étage précédent. Ainsi, pour chaque étage de bascules différent du premier étage, il y a un décalage de 1/(2 x freq2) par rapport à l'étage précédent.

Cela permet de travailler avec des signaux à haute fréquence, c'est-à-dire avec des récepteurs ayant une fréquence d'horloge élevée, malgré les limites physiques, notamment lors de la fabrication, des bascules qui ne sont plus capables d'échantillonner correctement à haute fréquence. Actuellement, cette limite en fréquence est d'environ 6 GHz.

Le dispositif comprend également un circuit numérique séquentiel, dite machine d'état ME, qui reçoit en entrée les sorties de toutes les bascules BS. Ainsi, ici comme il y a deux étages de bascules BS, pour chaque voie N générée, la machine d'état reçoit deux signaux, un issu de la première bascule de la voie BS1 et un autre issu de la seconde bascule de la voie BS2. Plus généralement, la machine d'état ME reçoit autant de signaux pour une voie qu'il y a d'étages de bascule BS dans cette voie.

La machine d'état ME a le même rôle que décrit précédemment, à savoir comparer les données des N voies par groupe de (2m+1) voies successives, sélectionner les groupes dont les voies ont des données identiques, puis sélectionner une seule voie et définir la valeur de P et éventuellement un pointeur permettant d'identifier la voie sélectionnée.

Quand la machine d'état ME reçoit plusieurs signaux, à cause de la présence de plusieurs bascules BS sur la voie, pour une seule voie, elle compare les données des N voies en comparant les signaux ayant subi le même échantillonnage. Donc elle va comparer tous les signaux des N voies venant du 1^{er} étage de bascules BS1 et en parallèle, elle compare tous les signaux des N voies venant du 2^{nd} étage de bascules BS2.

Le dispositif comprend également autant de multiplexeurs MUX1, MUX2 qu'il y a d'étages de bascules BS dans le dispositif. Ainsi, sur la figure 5, comme il y a deux étages de bascules BS1 et BS2, le dispositif comprend deux multiplexeurs MUX1 et MUX2. L'un des multiplexeurs MUX1 reçoit en entrée les signaux des N voies issus du premier étage de bascules BS1 et ayant été comparés par la machine d'état ME, tandis que l'autre multiplexeur MUX2 reçoit en entrée les signaux des N voies issus du second étage de bascules BS2 et ayant été comparés par la machine d'état ME. Ces multiplexeurs reçoivent également chacun le pointeur défini par la machine d'état, ce qui leur permet de renvoyer en sortie la voie sélectionnée par la machine d'état ME. C'est un circuit de traitement CT_B qui récupère les sorties (d1, d2) des multiplexeurs représentant la voie sélectionnée et ainsi reconstitue les données de cette voie sélectionnée avec un échantillonnage à freq2.

Selon un autre mode de réalisation de l'invention, les multiplexeurs sont compris dans la machine d'état ME, donc la sortie de la machine d'état est directement la voie sélectionnée échantillonnée à freq2 ou une des sous-voies (d1, d2) de la voie sélectionnée à plusieurs fréquences d'échantillonnage à cause des différents étages de bascules.

Selon un autre mode de réalisation, le dispositif comprend des verrous (ou « latch » en anglais) à la place des bascules BS pour effectuer l'échantillonnage des données des N voies. Il faut deux verrous pour remplacer une seule bascule BS. Ainsi chaque voie comprend au moins deux verrous.

Selon des modes de réalisation, la machine d'état peut être un ordinateur, un microcontrôleur, un circuit logique programmable (FPGA) ou un circuit intégré conçu spécialement pour l'application (ASIC).

## Revendications

1. Procédé de synchronisation de données numériques (D) envoyées en série par un transmetteur (A) ayant un signal d'horloge h1 de fréquence freq1 à un récepteur (B) ayant un signal d'horloge h2 de fréquence freq2, le procédé comprenant les étapes a) à d) itérées jusqu'à ce qu'une condition d'arrêt soit satisfaite et une étape e) réalisée à la suite de la dernière itération de l'étape d), les étapes a) à e) étant les suivantes :
a) envoi d'une donnée numérique par le transmetteur (A) vers le récepteur (B) ;
b) génération de N voies, chacune des voies comprenant la donnée reçue par le récepteur, et chaque i-ème voie étant décalée temporellement par rapport à la (i-1)-ème voie, N étant un entier supérieur à 3 et i étant compris entre 2 et N ;
c) échantillonnage des N voies à la fréquence freq2 de l'horloge h2 du récepteur afin de générer des données numériques alignées temporellement sur l'horloge h2 ;
d) comparaison des données des N voies par groupe de (2m+1) voies successives, m étant supérieur ou égal à 1 et tel que (2m+1) est inférieur ou égal à N, et sélection de groupes de (2m+1) voies pour lesquels les (2m+1) voies successives ont des données identiques à chaque itération ;
e) sélection d'une des voies appartenant aux groupes sélectionnés à l'étape précédente, les données comprises dans cette voie étant considérées comme synchronisées et en phase avec l'horloge h2 du récepteur et définition d'une variable P égale à la valeur i de la voie sélectionnée.

2. Procédé de synchronisation de données numériques selon la revendication 1 dans lequel, durant la première itération de l'étape d), la comparaison des valeurs par groupe de (2m+1) voies successives est réalisée sur les N voies et durant les itérations suivantes, elle est réalisée sur toutes les (2m+1) voies successives comprises dans les groupes sélectionnés à l'itération précédente de l'étape d).

3. Procédé de synchronisation de données numériques selon l'une des revendications 1 et 2 comprenant une étape d') réalisée entre la dernière itération de l'étape d) et l'étape e) dans lequel un groupe de (2m+1) voies successives est choisi parmi les groupes sélectionnés à la dernière itération de l'étape d), ce groupe choisi pouvant être le seul groupe sélectionné à la dernière itération de l'étape d), ou parmi les groupes sélectionnés à la dernière itération de l'étape d), ce groupe choisi pouvant être celui présentant une valeur de m la plus élevée, ou parmi les groupes sélectionnés à la dernière itération de l'étape d), ce groupe choisi pouvant être celui dont les voies successives sont les plus proches de la voie N/2, si N est pair ou de la voie (N+1)/2 si N est impair.

4. Procédé de synchronisation de données numériques selon l'une des revendications 1 à 3 dans lequel, la voie sélectionnée à l'étape e) est la voie m+1 d'un groupe de (2m+1) voies successives sélectionné à l'étape précédente.

5. Procédé de synchronisation de données numériques selon l'une des revendications 1 à 4 dans lequel la condition d'arrêt est choisie parmi un nombre d'itérations défini par un utilisateur ou dès qu'il ne reste plus qu'un seul groupe de (2m+1) voies successives ayant des données identiques à l'étape d).

6. Procédé de synchronisation de données numérique selon l'une des revendications 1 à 5 dans lequel l'étape b) comprend également une interpolation des données des N voies.

7. Procédé de synchronisation de données numériques selon l'une des revendications 1 à 6 dans lequel m est compris entre 1 et 4.

8. Procédé de synchronisation de données numériques selon l'une des revendications 1 à 7 dans lequel l'étape c) comprend plusieurs sous-étapes d'échantillonnage (étapes c'), c"), c‴)) des N voies à des fréquences strictement inférieures à la fréquence freq2, de manière à ce qu'à la suite de toutes les sous-étapes d'échantillonnage, les N voies soient échantillonnées à la fréquence freq2.

9. Procédé de synchronisation de données numériques selon l'une des revendications 1 à 8 comprenant les étapes supplémentaires suivantes réalisées à la suite de l'étape e) :
f) envoi d'une donnée numérique par le transmetteur (A) vers le récepteur (B), génération de N voies, chacune des voies comprenant la donnée reçue par le récepteur, et chaque i-ème voie étant décalée temporellement par rapport à la (i-1)-ème voie, N étant un entier supérieur ou égal à 3 et i étant compris entre 2 et N, et échantillonnage des N voies à la fréquence freq2 afin de générer des données numériques alignées temporellement sur l'horloge h2 ;
g) comparaison des données numériques des (2m+1) voies successives du groupe sélectionné à l'étape d) et comprenant la P-ème voie, P étant défini à l'étape e) ;
h) modification de la valeur de P si les valeurs des données des (2m+1) voies comparées à l'étape g) sont différentes, telle que si la donnée de la voie m du groupe de (2m+1) voies est différente de la voie (m+1), alors la valeur de P devient égale à (P - 1), ou telle que si la donnée de la voie m+2 du groupe de (2m+1) voies est différente de la voie (m+1), alors la valeur de P devient égale à (P + 1).

10. Dispositif de synchronisation de données numériques comprenant :
- un circuit de mise en forme (CMF) d'une donnée numérique (D) émise par un émetteur (A) ayant un signal d'horloge h1 de fréquence freq1, reçue sur une entrée (IN) du dispositif, comprenant N sorties et relié à l'entrée du dispositif et configuré de manière à générer N voies (V1 à V6) comprenant chacune la donnée numérique (D) et à décaler temporellement chaque voie par rapport aux voies précédentes, N étant un entier supérieur à 3 et les N voies correspondant aux N sorties du circuit ;
- des bascules (BS) configurées de manière à ce que les N voies soient échantillonnées à une fréquence inférieure ou égale à la fréquence (freq2) d'horloge du récepteur (B), les N voies comprenant au moins une bascule ; et
- une machine d'état (ME) configurée de manière à ce que, pour chaque itération et jusqu'à ce qu'une condition d'arrêt soit satisfaite, elle soit capable de :
- recevoir en entrée au moins N voies échantillonnées et à comparer les données par groupe de (2m+1) voies successives comprises dans un même groupe,
- sélectionner au moins un groupe de (2m+1) voies successives pour lesquels les (2m+1) voies successives ont des données identiques à chaque itération,
- sélectionner une voie appartenant à un groupe sélectionné lorsque la condition d'arrêt a été satisfaite et
définir la valeur de P. 1

## Patentansprüche

1. Verfahren zum Synchronisieren digitaler Daten (D), die seriell durch einen Sender (A) mit einem Taktsignal h1 der Frequenz freq1 zu einem Empfänger (B) mit einem Taktsignal h2 der Frequenz freq2 gesendet werden, wobei das Verfahren die Schritte a) bis d), die wiederholt werden, bis eine Stoppbedingung erfüllt ist, sowie einen Schritt e) umfasst, der nach der letzten Iteration des Schritts d) durchgeführt wird, wobei die Schritte a) bis e) wie folgt sind:
a) Senden eines digitalen Datums durch den Sender (A) zum Empfänger (B);
b) Erzeugen von N Kanälen, wobei jeder der Kanäle das durch den Empfänger empfangene Datum umfasst und jeder i-te Kanal gegenüber dem (i-1)-ten Kanal zeitlich verschoben ist, wobei N eine ganze Zahl größer als 3 ist und i zwischen 2 und N liegt;
c) Abtasten der N Kanäle mit der Frequenz freq2 des Takts h2 des Empfängers, um digitale Daten zu erzeugen, die zeitlich mit dem Takt h2 ausgerichtet sind;
d) Vergleichen der Daten der N Kanäle pro Gruppe von (2m+1) aufeinanderfolgenden Kanälen, wobei m gleich oder größer 1 ist, und so, dass (2m+1) gleich oder kleiner N ist, und Auswählen von Gruppen von (2m+1) Kanälen, bei denen die (2m+1) aufeinanderfolgenden Kanäle bei jeder Iteration identische Daten haben;
e) Auswählen eines der Kanäle, die zu den im vorherigen Schritt ausgewählten Gruppen gehören, wobei die in diesem Kanal enthaltenen Daten als mit dem Takt h2 des Empfängers synchronisiert und in Phase angesehen werden, und Definieren einer Variablen P, die gleich dem Wert i des ausgewählten Kanals ist.

2. Verfahren zum Synchronisieren digitaler Daten nach Anspruch 1, wobei während der ersten Iteration von Schritt d) der Vergleich der Werte pro Gruppe von (2m+1) aufeinanderfolgenden Kanälen auf den N Kanälen durchgeführt wird und während der folgenden Iterationen auf allen (2m+1) aufeinanderfolgenden Kanälen durchgeführt wird, die in den in der vorhergehenden Iteration von Schritt d) ausgewählten Gruppen umfasst sind.

3. Verfahren zum Synchronisieren digitaler Daten nach einem von Ansprüchen 1 und 2, das einen zwischen der letzten Iteration von Schritt d) und Schritt e) durchgeführten Schritt d') umfasst, in dem eine Gruppe von (2m+1) aufeinanderfolgenden Kanälen aus den in der letzten Iteration von Schritt d) ausgewählten Gruppen ausgewählt wird, wobei diese ausgewählte Gruppe die einzige Gruppe sein kann, die in der letzten Iteration von Schritt d) ausgewählt wurde, oder aus den in der letzten Iteration von Schritt d) ausgewählten Gruppen, wobei diese ausgewählte Gruppe diejenige mit dem höchsten Wert von m sein kann, oder aus den in der letzten Iteration von Schritt d) ausgewählten Gruppen, wobei diese ausgewählte Gruppe diejenige sein kann, deren aufeinanderfolgende Kanäle dem Kanal N/2 am nächsten liegen, wenn N gerade ist, oder dem Kanal (N+1)/2, wenn N ungerade ist.

4. Verfahren zum Synchronisieren digitaler Daten nach einem der Ansprüche 1 bis 3, wobei der in Schritt e) ausgewählte Kanal der Kanal m+1 aus einer Gruppe von (2m+1) im vorherigen Schritt ausgewählten aufeinanderfolgenden Kanälen ist.

5. Verfahren zum Synchronisieren digitaler Daten nach einem der Ansprüche 1 bis 4, wobei die Stoppbedingung aus einer benutzerdefinierten Anzahl von Iterationen ausgewählt wird oder sobald nur noch eine Gruppe von (2m+1) aufeinanderfolgenden Kanälen mit identischen Daten in Schritt d) übrig ist.

6. Verfahren zum Synchronisieren digitaler Daten nach einem der Ansprüche 1 bis 5, wobei Schritt b) auch eine Interpolation der Daten der N Kanäle umfasst.

7. Verfahren zum Synchronisieren digitaler Daten nach einem der Ansprüche 1 bis 6, wobei m zwischen 1 und 4 liegt.

8. Verfahren zum Synchronisieren digitaler Daten nach einem der Ansprüche 1 bis 7, wobei Schritt c) mehrere Unterschritte (Schritte c'), c"), c‴)) des Abtastens der N Kanäle mit Frequenzen umfasst, die strikt unterhalb der Frequenz freq2 liegen, so dass nach allen Abtastunterschritten die N Kanäle mit der Frequenz freq2 abgetastet sind.

9. Verfahren zum Synchronisieren digitaler Daten nach einem der Ansprüche 1 bis 8, das die folgenden nach Schritt e) durchgeführten zusätzlichen Schritte umfasst:
f) Senden eines digitalen Datums durch den Sender (A) zum Empfänger (B), Erzeugen von N Kanälen, wobei jeder der Kanäle das vom Empfänger empfangene Datum umfasst und jeder i-te Kanal gegenüber dem (i-1)-ten Kanal zeitlich verschoben ist, wobei N eine ganze Zahl gleich oder größer 3 ist und i zwischen 2 und N liegt, und Abtasten der N Kanäle mit der Frequenz freq2, um digitale Daten zu erzeugen, die zeitlich mit dem Takt h2 ausgerichtet sind;
g) Vergleichen der digitalen Daten von (2m+1) aufeinanderfolgenden Kanälen aus der in Schritt d) ausgewählten Gruppe, und die den P-ten Kanal umfasst, wobei P in Schritt e) definiert wird;
h) Ändern des Wertes von P, wenn die Werte der Daten der in Schritt g) verglichenen (2m+1) Kanäle unterschiedlich sind, so dass, wenn das Datum des Kanals m der Gruppe von (2m+1) Kanälen sich von Kanal (m+1) unterscheiden, der Wert von P gleich (P-1) wird, oder so dass, wenn das Datum des Kanals m+2 der Gruppe von (2m+1) Kanälen sich von Kanal (m+1) unterscheiden, der Wert von P gleich (P+1) wird.

10. Vorrichtung zum Synchronisieren digitaler Daten, die Folgendes umfasst:
- eine Schaltung (CMF) zum Formatieren eines digitalen Datums (D), das durch einen Sender (A) mit einem Taktsignal h1 mit der Frequenz freq1 gesendet wird, an einem Eingang (IN) der Vorrichtung empfangen wird, N Ausgänge umfasst und mit dem Eingang der Vorrichtung verbunden und zum Erzeugen von N Kanälen (V1 bis V6), die jeweils das digitale Datum (D) umfassen, und zum zeitlichen Verschieben jedes Kanals in Bezug auf die vorhergehenden Kanäle konfiguriert ist, wobei N eine ganze Zahl gleich oder größer als 3 ist und die N Kanäle den N Ausgängen der Schaltung entsprechen;
- Flip-Flops (BS), die so konfiguriert sind, dass die N Kanäle mit einer Frequenz abgetastet werden, die gleich der oder kleiner als die Taktfrequenz (freq2) des Empfängers (B) ist, wobei die N Kanäle mindestens ein Flip-Flop umfassen; und
- eine Zustandsmaschine (ME), die so konfiguriert ist, dass sie für jede Iteration, und bis eine Stoppbedingung erfüllt ist, in der Lage ist zum:
- Empfangen von mindestens N abgetasteten Kanälen als Eingang und Vergleichen der Daten pro Gruppe von (2m+1) aufeinanderfolgenden Kanälen, die in einer selben Gruppe enthalten sind,
- Auswählen von mindestens einer Gruppe von (2m+1) aufeinanderfolgenden Kanälen, für die die (2m+1) aufeinanderfolgenden Kanäle bei jeder Iteration identische Daten aufweisen,
- Auswählen eines Kanals, der zu einer ausgewählten Gruppe gehört, wenn die Stoppbedingung erfüllt wurde, und
Definieren des Wertes von P.

## Claims

1. A method for synchronising digital data (D) sent in series by a transmitter (A) having a clock signal h1 of frequency freq1 to a receiver (B) having a clock signal h2 of frequency freq2, the method comprising the steps a) to d), iterated until a stoppage condition is met, and a step e) carried out following the last iteration of step d), the steps a) to e) being the following:
a) sending, with the transmitter (A), a digital datum to the receiver (B);
b) generating N channels, each of the channels comprising the datum received by the receiver, and each i-th channel being time shifted with respect to the (i-1)th channel, N being an integer higher than to 3 and i being comprised between 2 and N;
c) sampling the N channels at the frequency freq2 of the clock h2 of the receiver in order to generate digital data temporally aligned with the clock h2;
d) comparing the data of the N channels in groups of (2m+1) successive channels, m being higher than or equal to 1 and such that (2m+1) is lower than or equal to N, and selecting groups of (2m+1) channels in which the (2m+1) successive channels contain identical data in each iteration;
e) selecting one of the channels belonging to the groups selected in the preceding step, the data contained in this channel being considered to be synchronised and in phase with the clock h2 of the receiver and defining a variable P equal to the value i of the selected channel.

2. The method for synchronising digital data according to claim 1 wherein, during the first iteration of step d), the comparison of the values in groups of (2m+1) successive channels is carried out on the N channels and during the following iterations, it is carried out on all the (2m+1) successive channels comprised in the groups selected in the preceding iteration of step d).

3. The method for synchronising digital data according to one of claims 1 and 2, comprising a step d') carried out between the last iteration of step d) and step e) in which a group of (2m+1) successive channels is chosen among the groups selected in the last iteration of step d), this chosen group possibly being the only group selected in the last iteration of step d), or among the groups selected in the last iteration of step d), this chosen group possibly being the group having the highest value of m, or among the groups selected in the last iteration of step d), this chosen group possibly being the group the successive channels of which are closest to the channel N/2 if N is even or to the channel (N+1)/2 if N is odd.

4. The method for synchronising digital data according to one of claims 1 to 3 wherein the channel selected in step e) is the channel m+1, of a group of (2m+1) successive channels, selected in the preceding step.

5. The method for synchronising digital data according to one of claims 1 to 4, wherein the stoppage condition is chosen among a number of iterations defined by a user or being that there remains only a single group of (2m+1) successive channels having identical data in step d).

6. The method for synchronising digital data according to one of claims 1 to 5 wherein step b) also comprises an interpolation of the data of the N channels.

7. The method for synchronising digital data according to one of claims 1 to 6, wherein m is comprised between 1 and 4.

8. The method for synchronising digital data recording to one of claims 1 to 7, wherein step c) comprises several substeps (steps c'), c"), c‴)) of sampling the N channels at frequencies strictly lower than the frequency freq2, so that following all the sampling substeps, the N channels are sampled at the frequency freq2.

9. The method for synchronising digital data according to one of claims 1 to 8, comprising the following additional steps carried out following step e):
f) sending, with the transmitter (A), a digital datum to the receiver (B), generating N channels, each of the channels comprising the datum received by the receiver, and each i-th channel being time shifted with respect to the (i-1)th channel, N being an integer higher than or equal to 3 and i being comprised between 2 and N, and sampling the N channels at the frequency freq2 in order to generate digital data temporally aligned with the clock h2;
g) comparing the digital data of the (2m+1) successive channels of the group selected in step d) and containing the P-th channel, P being defined in step e);
h) modifying the value of P if the values of the data of the (2m+1) channels compared in step g) are different, such that if the datum of the channel m of the group of (2m+1) channels is different from the channel (m+1), then the value of P becomes equal to (P-1), or such that if the datum of the channel m+2 of the group of (2m+1) channels is different from the channel (m+1), then the value of P becomes equal to (P+1).

10. A digital data synchronisation device comprising:
- a circuit for formatting (CMF) a digital datum (D) transmitted by a transmitter (A) having a clock signal h1 of frequency freq1, received on an input (IN) of the device, comprising N outputs and connected to the input of the device and configured so as to generate N channels (V1 to V6) each comprising the digital datum (D) and to time shift each channel with respect to the preceding channels, N being an integer higher than or equal to 3 and the N channels corresponding to the N outputs of the circuit;
- flip-flops (BS) configured so that the N channels are sampled at a frequency lower than or equal to the clock frequency (freq2) of the receiver (B), the N channels comprising at least one flip-flop; and
- a state machine (ME) configured in such a way that, for each iteration and until a stop condition is satisfied, it is capable of:
- receiving as input at least N sampled channels and comparing the data for each group of (2m+1) successive channels contained in one and the same group,
- selecting at least one group of (2m+1) successive channels in which the (2m+1) successive channels contain identical data in each iteration,
- selecting a channel belonging to a selected group when the stop condition has been satisfied and
setting the P value.
